(19) **Europäisches Patentamt / European Patent Office / Office européen des brevets**

(11) **EP 1 501 327 B1**

(12) **EUROPEAN PATENT SPECIFICATION**

(45) Date of publication and mention
of the grant of the patent:
**24.01.2007 Bulletin 2007/04**

(51) Int Cl.:
*H04Q 7/38* (2006.01)     *H04B 1/707* (2006.01)

(21) Application number: **03425496.1**

(22) Date of filing: **24.07.2003**

(54) **Method to estimate the interference signal code power (ISCP) in a TD-CDMA system**

Verfahren zur Schätzung der Interferenzsignalkodeleistung (iscp) in einem TD-CDMA System

Procédé pour éstimer la puissance de code de signal parasite (ISCP) dans un système TD-CDMA

(84) Designated Contracting States:
**AT BE BG CH CY CZ DE DK EE ES FI FR GB GR HU IE IT LI LU MC NL PT RO SE SI SK TR**

(43) Date of publication of application:
**26.01.2005 Bulletin 2005/04**

(73) Proprietor: **Siemens S.p.A.**
**20126 Milano (IT)**

(72) Inventors:
• **Capaccioli, Massimo**
**20099 Sesto San Giovanni (MI) (IT)**
• **De Benedittis, Rossella**
**20137 Milano (IT)**

(74) Representative: **Giustini, Delio**
**Siemens Mobile Communications S.p.A,**
**Palazzo Gorky**
**Via Monfalcone, 1**
**20092 Cinisello Balsamo (IT)**

(56) References cited:
EP-A- 1 176 730          WO-A-02/05441
WO-A-03/005752

• "3GPP TS 25.225 v3.12.0, 3rd Generation Partnership Project; Technical Specification Group Radio Access Network; Physical Layer-Measurements (TDD)" June 2003 (2003-06), 3GPP XP002262902 * paragraphs [5.1.1],[5.1.2], [5.1.3] *

EP 1 501 327 B1

Description

FIELD OF THE INVENTION

The present invention relates to the field of the CDMA (Code Division Multiple Access) cellular systems and more precisely to a method to estimate the Interference Signal Code Power (ISCP) in digital cellular communication systems employing time division and code division multiple access (CDMA). Possible UMTS (Universal Mobile Telecommunication Systems) candidates to implement the invention are the following:

- Time Division - Synchronous Code Division Multiple Access (TD-SCDMA) radio system at 1.28 Mcps, or TSM (TD-SCDMA System Mobile), standardized within China Wireless Telecommunication Standards (CWTS);
- both UTRA-TDD (UMTS Terrestrial Radio Access - Time Division Duplex) modes, standardized within the 3rd Generation Partnership Project (3GPP); namely: the LCR (Low Chip Rate) TDD radio system at 1.28 Mcps, and the HCR (High Chip Rate) TDD radio system at 3.84 Mcps, respectively;
- any other communication system employing the CDMA technique for transmitting signal subdivided in time frames and timeslots and making use of uncorrelated sequences, known at the entities connected at the two ends of the radio channel, for the aim of synchronisation and/or estimation of the impulse response of the radio channel, or other aims.

BACKGROUND ART

**WO 03005752 A** discloses a method/device for controlling radio resources in an UMTS system based on 3GPP CDMA FDD (Time Division Duplex) specifications. The method is aimed to determine an active set of links between the Mobile Station (MS) and one or more Base Stations (BS) in order to implement macro-diversity, which is possible in a CDMA channel, and to use it to execute soft handovers. The characteristics of the system are largely referred in 3GPP specifications. Different measures are performed on the active set, great relevance assumes the Signal to Interference Ratio (SIR) which is calculated as: SIR = (RSCP/ISCP)$\times$(SF/2), where: RSCP (Received Signal Code Power), ISCP (Interference Signal Code Power), and SF (Spreading Factor). A precise method to calculate the ISCP is not indicated.

**EP 1176730 A1** discloses an apparatus, included in an UMTS system referable to the 3GPP CDMA FDD standard, for calculating the noise plus interference power level (ISCP) in a received signal, by means of the correlation between a signal sequence received on the CPICH (Common Pilot Channel), after despreading, and a set of M orthogonal sequences generated by a code generator included in the mobile stations.

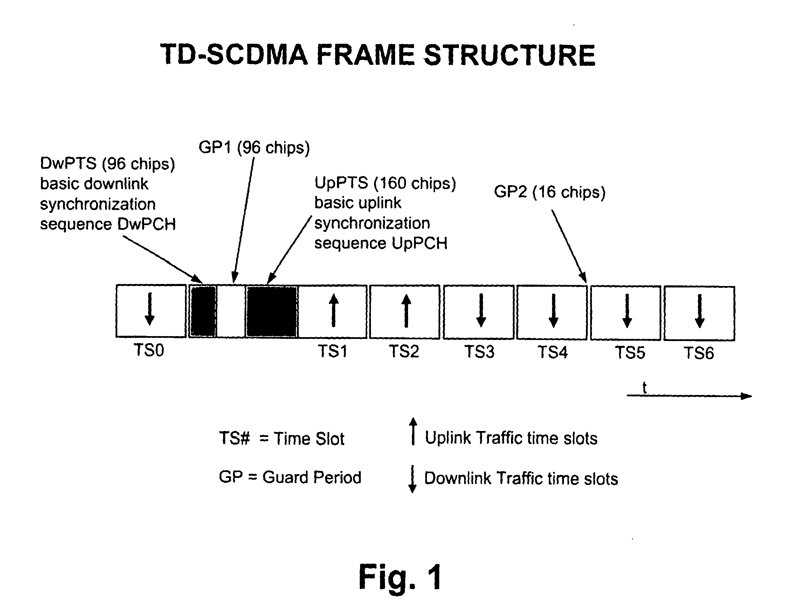

**Fig.1** describes without limitation the frame structure of the TD-SCDMA radio system. This frame structure equally applies to a LCR-TDD and to a TSM system. The structure includes a fixed number of timeslots (9), in part devoted to the uplink transmissions from the mobile stations (MS) to the base station (BS), and in part to the downlink transmissions from the base station to the mobiles. A special downlink timeslot, named DwPTS (Downlink Pilot Time Slot), includes a basic downlink synchronisation sequence DwPCH of 96 chips (one chip is equivalent to a modulation element). A special uplink timeslot, named UpPTS (Uplink Pilot Time Slot), includes a basic uplink synchronisation sequence UpPCH of 160 chips, selectable by the MS among a restricted number of sequences (e.g. 8) to perform random access to the network. The two special timeslots are separated by a Guard Period (GP) 96 chips long.

The frame structure of **Fig. 1** depicts the set of physical channels defined by a triplet of frequency, timeslot, and code. Every traffic timeslot (i.e. the remaining time slots of the frame) includes a midamble sequence and two data bursts at the two sides. Each data burst includes symbols subjected to channelisation codes (spreading codes); a variable number of spreading codes (maximum N = 16) orthogonal to each other is appositely provided in the system. Timeslots TS0 to TS6 are either assigned to transport channels conveying traffic and/or signalling in dedicated mode or transport control channels conveying common messages broadcast by the base station in the serving cell or sent by the MSs to request an access to the network's services. The physical midamble of 144 chips can include several midamble sequences generated by different cyclical shifts of an unique basic sequence. Details of the frame and timeslot structures are given in **3GPP TS 25.221**: "Physical channels and mapping of transport channels onto physical channels (TDD)".

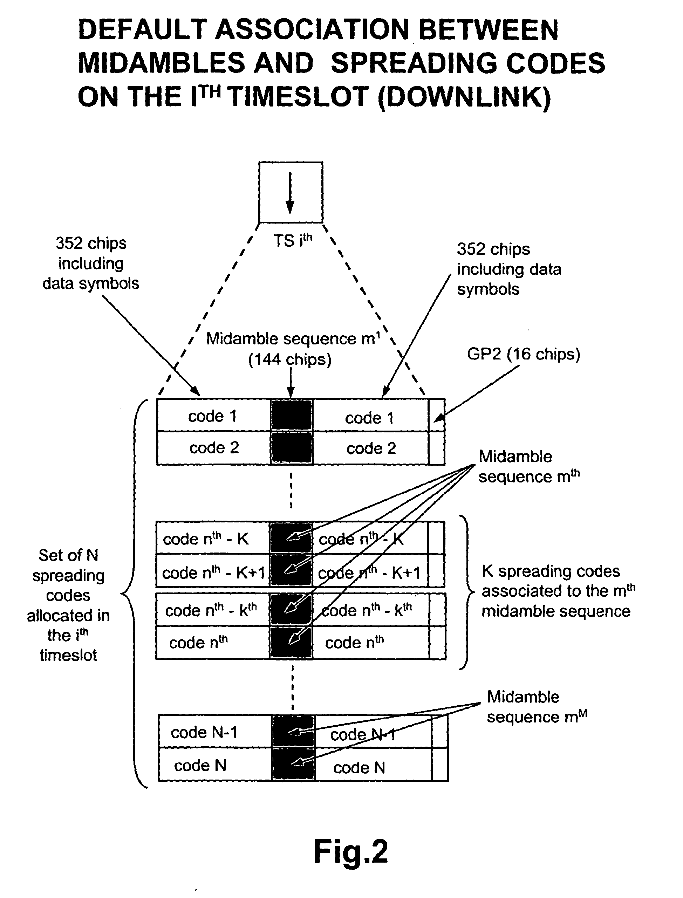

**Fig.2** shows the possible structure of an $i^{th}$ timeslot (downlink) at a given $j^{th}$ carrier frequency. According to 3GPP TS 25.221, the serving BS broadcasts the so called DMA (Default Midamble Association) indication for allocating the N spreading codes on M midamble sequences towards the mobiles. The midamble sequences are not subjected to orthogonal spreading code but are nevertheless poor cross-correlated to make the $K$ user channels each other distinguishable. With reference to **fig.2,** the channel estimation performed on the midamble sequence $m^{(1)}$ is used to decode the information symbols (data) on the associated channelisation codes 1 and 2; the same applies to the midamble sequence $m^{th}$ and codes from ($n^{th}$ - K) to $n^{th}$, and so on.

The central problem of the invention that will be disclosed is the evaluation of the interference affecting a given timeslot and carrier frequency, in particular the so-called Interference Signal Code Power (ISCP). This interference arises because, though the spreading/midamble sequences transmitted in the same time interval were in origin mutually orthogonal/uncorrelated, the propagation channel (i.e. the fast fading) generally distorts the transmitted signal in a way that these sequences arrive no more perfectly orthogonal at the receiver. This is particularly true for the K signals transmitted in uplink by the K users, which undergone different propagation side effects on the K different propagation channels, but in minor measure the loss of orthogonality also affects the K signals transmitted in downlink by the base station towards the plurality of users. In the latter case, although each MS receives all the K signals along its own propagation channel, a residual loss of orthogonality is still possible by effect of noise, selective fading, or other side effects. Due to the loss of orthogonality, Multiple Access Interference (MAI) affects the reconstructed signal/s and sophisticated techniques, such as joint detection/estimation, have to be implemented to counterfeit the quality degrading. The joint detection makes use of the cross-correlation among the spreading codes for cancelling the orthogonal interference. An additional significant interference source is also caused by the neighbour cells.

According to **3GPP TS 25.225**: "Measurement TDD", the conventional estimation of the ISCP interference in a TD-CDMA radio system starts by indicating to the radio entity (either the MS or the BS) involved in the ISCP estimation, an available midamble sequence in a given time slot and carrier frequency usable for this aim. The term "available" specifically means a midamble not used by the BS for any radio connection and consequently not transmitted. The said radio entity correlates the signal received in the physical channel of the spare midamble with the spare midamble sequence and the result of the correlation provides indication of which interference affects the timeslot. The physical channel of a midamble means the time window of the corresponding sequence in a given timeslot of the signal transmitted on a given carrier frequency. It is worth to remind that the correlation process in correspondence of the not transmitted midamble deletes that part of the interference which is orthogonal to the useful signal and therefore not affecting the receiver. Instead, the ISCP parameter represents the interference part which is not orthogonal to the useful signal, let's call it "parallel", and therefore cannot be eliminated at the receiver.

The ISCP measurement allows to estimate the perceived quality at the measuring radio entity, and therefore it can be used to trigger intra or inter-cell handover procedures, or to calculate the Signal to Interference Ratio (SIR), or to decide on resource assignment strategies.

## OUTLINED TECHNICAL PROBLEM

The main problem of the conventional method for measuring the ISCP interference is that to require that at least one midamble sequence is not transmitted in the subjected time slot and carrier frequency for all the duration of the ISCP measurement, putting restrictions to the resource allocation criteria. In fact, it can happen that, particularly in the busy hours, the network is unable to free a midamble and in such a case the ISCP measurement is not feasible with wrong consequences for the system.

## OBJECT OF THE INVENTION

The purpose of the present invention is that to indicate a method to perform ISCP measurements on TD-CDMA radio systems without the need for a spare midamble sequence on a specific timeslot and carrier frequency for all the duration of the measurement. This object is equivalent to indicate a method able to perform ISCP measurements also when the midamble sequence is transmitted towards the entity that performs the measure, permitting to have a reliable estimation of the interference perceived by that specific radio entity (e.g. MS), or towards any other radio entity, without any restriction to the radio resource allocation in the peer entity (e.g. BSS).

## SUMMARY AND ADVANTAGES OF THE INVENTION

To achieve said purpose, the present invention defines a method to estimate the ISCP interference affecting a radio channel in a cellular telephone system, as disclosed in the independent claims. This type of interference comprises: the parallel interference part composed respectively by the "Intra-cell" interference, caused by the remaining (M-1) active midamble sequences in the cell, and by the "Inter-cell" interference coming from the neighbor cells; and the Additive White Gaussian Noise (AWGN).

Focal points of the method are: 1) the estimation of the path-loss by the mobile station and the transfer of this information to the base station; 2) the correlation between the signal received in correspondence of the time slot and carrier frequency at which the midamble selected for the measure is transmitted by the BS and the selected midamble sequence, which is known by the two entities connected at the two ends of the radio channel.

In a first embodiment of the method the radio entity which performs the correlation is the mobile station; in such a case the result of the correlation is transferred to the base station together with the estimated path-loss and the latter completes the ISCP calculation, as disclosed in claim 1.

In a second embodiment of the method the radio entity which performs the correlation is the base station; in such a case only the path-loss estimated by the mobile station is transferred to the base station, as disclosed in the independent claim 2.

The estimation of the path-loss by the mobile station avails of a beacon channel transmitted with constant reference power by the base station. In such a case the following two parameters referred to the beacon channel are measured by the mobile station: Received Signal Strength Indicator (RSSI) and Received Signal Code Power (RSCP), the first refers to the physical beacon channel (timeslot and carrier frequency) while the second to the logical beacon channel (code sequence). Besides, a particular assumption on the "parallel" inter-cell interference, that will be explained later on, allows to obtain the path-loss directly from a linear combination of the two above mentioned measures. Beacon channels are present in all the cellular systems, so that the indicated path-loss estimation has great generality.

Furthermore, the measure of the RSSI parameter on the given timeslot and carrier frequency provides indication on the received average power from the midamble sequences active in that timeslot at that carrier frequency. The measure is affected by the inter-cell interference, parallel and orthogonal, plus the AWGN. By the knowledge of the path-loss and the total power transmitted on all the M active midambles, the inter-cell interference plus noise can be evaluated from the measure of the RSSI. Besides, from the preceding estimation of the ISCP, the two components of the interference, namely the intra-cell and the inter-cell, can be separated.

In the case that the measuring radio entity is active on the channel (carrier frequency, time slot, and spreading codes) associated to the selected midamble sequence at which ISCP measurement is performed, the method of the invention allows to obtain an estimation of the ISCP and of the SIR exactly affecting that radio entity on all specific spreading codes associated to that selected midamble sequence.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig. 1,** already described, shows a TD-SCDMA frame structure;
- **fig.2,** already described, shows the code dimension of an $i^{th}$ downlink timeslot of the frame of fig.1, indicating the default associations between midambles and spreading codes.

## DETAILED DESCRIPTION OF AN EMBODIMENT OF THE INVENTION

**Fig.2** shows the N spreading codes allocated by the base station on M midamble sequences in downlink direction towards M mobiles on the highlighted timeslot $i^{th}$ at a given carrier frequency. Among the possible midamble sequences, the $m^{th}$ has been selected for the ISCP evaluation. At the transmitter side, indicating with $P_t$ the transmitted average power by the BS on the total number M of active midamble sequences, it follows that:

$$P_t = \sum_{m=1}^{M} P_m$$

$$(1)$$

where: $P_m$ is the transmitted power for the $m^{th}$ midamble sequence.

At the receiver side, the MS measures the $RSCP_m$ on the $m^{th}$ midamble sequence appositely selected (either assigned by default or signalled by the BS) for the interference calculation through a correlation process. The correlation is performed between the signal received on the physical channel of the $m^{th}$ midamble and the relevant sequence, so that:

$$RSCP_m = \left[ A \cdot P_m \right] + ISCP_m$$

$$m \in [1, M] \qquad\qquad (2)$$

where:

- A is the attenuation factor, or the inverse of the path-loss L, between the MS and the BS; this factor is $\propto 1/L$.
- $ISCP_m$ is the interference signal code power affecting the $m^{th}$ midamble sequence as perceived by the MS radio entity and which can not be eliminated at the receiver; it comprises the parallel interference part composed respectively by the "Intra-cell" interference, caused by the remaining (M-1) active midamble sequences, the "Inter-cell" interference, coming from the neighbour cells, and the Additive White Gaussian Noise (AWGN). From the computed $ISCP_m$ and the measured $RSCP_m$ it is possible to obtain, as a ratio, the Signal to Interference Ratio as perceived by the measuring MS on that specific $m^{th}$ midamble sequence (and therefore also for the associated K spreading codes).
- $P_m$ is the power transmitted by the BS radio entity on the $m^{th}$ midamble sequence.

Assuming that the path-loss value L is known, and therefore also the attenuation factor A, as well as the transmitted power $P_m$ on the $m^{th}$ midamble sequence, it is possible to derive the interference $ISCP_k$ affecting the $m^{th}$ midamble sequence (and the associated K spreading codes) from relationship (2). Taking into account that:

- the path loss, and therefore the attenuation factor A, can be better estimated at the MS, by measuring downlink channels, said "beacon channels", which are transmitted by the BS at constant reference power level, and
- the single midamble sequence transmitted power, $P_m$, or the total transmitted power, $P_t$, is better known in the BS which can easily track the power adjustments following the power control commands from the connected MSs,

a preferred embodiment of this invention consists in that the MS reports to the BS the measured $RSCP_m$ , together with the calculated path loss L or attenuation factor A; the BS derives the $ISCP_m$ value applying relationship (2).

The path loss L (or attenuation factor A) at the MS is calculated considering, without limitation, a TD-CDMA radio system (e.g. TSM or LCR TDD) having a beacon channel the Downlink Pilot Channel DwPCH transmitted at constant reference power level known at the MSs. Taking into account that, on the DwPTS time slot, the base station transmits only the DwPCH sequence, i.e. there is no code division multiple access on this time slot, the MS measures the received total power, $RSSI_{DwPTS}$, from the DwPTS. The measured value can be expressed as:

$$RSSI_{DwPTS} = A \cdot P_{DwPCH} + X \qquad (3)$$

where:

A is the attenuation factor between the MS and the BS to be estimated;
$P_{DwPCH}$ is the BS transmitted power on the DwPCH;
X is the total Inter-cell interference plus the AWGN on the DwPTS.

The MS measures as well, via a correlation process, the received power, $RSCP_{DwPCH}$, on the DwPCH. The measured value can be expressed as:

$$RSCP_{DwPCH} = A \cdot P_{DwPCH} + X_{//}$$

$$(4)$$

where:

$X_{//}$ is the Inter-cell interference, or parallel interference, which cannot be eliminated by the correlation process plus the AWGN on the DwPTS.
Due to the unbias of the AWGN noise and of the inter-cell interference, it is allowed to assume that:

$$X \cong 2 \cdot X_{//}$$

$$(5)$$

From that the MS knows the BS applied $P_{DwPCH}$ value, it can easily derive the attenuation factor A by a linear combination of relationships (3), (4) and (5). In particular the following expression is valid:

$$L = \frac{1}{A} = \frac{P_{DwPCH}}{2RSCP_{DwPCH} - RSSI_{DwPTS}}$$

(6)

Once the $ISCP_m$ has been estimated, it should be appreciated the opportunity of discriminating between intra-cell and inter-cell interferences affecting the $m^{th}$ midamble sequence. For this aim the MS also measures the total average power RSSI received from all the active midambles, which can be expressed as follows:

$$RSSI = [A \cdot P_t] + X$$

(7)

where:

$$X = I_{inter-cell} + N .$$

$I_{inter-cell}$ is the interference, parallel and orthogonal, coming from the neighbour cells on that specific time slot and carrier frequency.
N is the AWGN on that specific time slot and carrier frequency.
$P_t$ and A are the same parameters defined in relationships (1) and (2) respectively.
Assuming that the path-loss value L is known, and therefore also the attenuation factor A, as well as the transmitted power $P_t$ on all M active downlink midamble sequences, it is possible to compute the inter-cell interference plus the AWGN from relationship (7). Then from the interference X derived by the expression (7) and from the interference $ISCP_m$ derived by the expression (2), it is possible to separate the intra-cell interference from the inter-cell interference contribution affecting the selected $m^{th}$ midamble and the associated codes.
Only for the sake of completeness, the case that only an active midamble sequence is allocated (M=1) in a specific timeslot and carrier frequency is commented in the following. In this case, the $ISCP_1$ estimation on the only active midamble sequence (and on the associated K spreading codes) is possible without needing to calculate the path-loss L value. As for the above described general case, the MS measures the $RSCP_1$ on the only active midamble sequence for interference calculation through a correlation process, so that:

$$RSCP_1 = [A \cdot P_1] + ISCP_1$$

(8)

where:

A is the attenuation factor, or the inverse of the path-loss (L), between the MS and the BS; this factor is $\propto 1/L$;
$ISCP_1$ is the interference signal code power affecting the only active midamble sequence as perceived by the MS radio entity and which can not be eliminated at the receiver; it comprises the parallel interference part composed by the "Inter-cell" interference, coming from the neighbour cells, and the AWGN;
$P_1$ is the power transmitted by the BS radio entity on the only active midamble sequence.

The MS also measures the total average power RSSI received from the physical channel (time slot and carrier frequency) which accomodates the only active midamble sequence, which can be expressed as follows:

$$RSSI = A \cdot P_1 + X \qquad (9)$$

where:

$$X = I_{\text{inter-cell}} + N ;$$

$I_{\text{inter-cell}}$ is the interference, parallel and orthogonal with respect to the only active midamble sequence, coming from the neighbour cells on that specific time slot and carrier frequency;

N is the AWGN on that specific time slot and carrier frequency;

$P_1$ and A are the same parameters defined in relationships (8) and (9) respectively.

Then, subtracting the relationship (8) from relationship (9), it follows that:

$$RSSI - RSCP_1 = \left[ A \cdot P_1 + X \right] - \left[ A \cdot P_1 + ISCP_1 \right] = X - ISCP_1 \qquad (10)$$

Due to the unbias of the AWGN and of the inter-cell interference, it is allowed to assume that:

$$X \cong 2 \cdot X_{//} \cong 2 \cdot ISCP_1 \qquad (11)$$

where: $X_{//}$ is the Inter-cell interference, or parallel interference, which cannot be eliminated on the only active midamble sequence by the correlation process plus the AWGN. This factor is exactly equal to the above mentioned $ISCP_1$ parameter. Exploiting the relationships (10) and (11), the needed $ISCP_1$ estimation on the only active midamble sequence is calculated as it follows:

$$RSSI - RSCP_1 \cong ISCP_1 \qquad (12)$$

**Claims**

**1.** Method to estimate the interferences affecting a radio channel set up in a cellular telephone system for communicating between a base station and a mobile station conveying on a carrier frequency signals subdivided in time frames and the frames in timeslots each including bursts of traffic data accessed by code division (code 1, ... . , code N) and given uncorrelated sequences of symbols, named for convenience midambles, known in advance by the peer radio entities connected at the two ends of the channel and used either for time synchronisation, and/or the estimation of the impulse response of the relevant radio channel, **characterised in that** a mobile station of that cellular telephone system connected to a serving base station of the same cellular telephone system performs the steps of:

a) correlating the baseband signal received in correspondence of the physical channel which carries a midamble sequence ($m^{th}$) selected among the ones transmitted by the serving base station with the corresponding sequence ($m^{th}$);

b) evaluating the path-loss of the radio channel and transmitting the relevant value together with the result of the correlation to the base station; and

the base station performs the steps of:

c) dividing the known-in-advance transmission power of the selected midamble sequence ($m^{th}$) by the value of the path-loss, then subtracting the quotient from the result of the correlation obtaining both intra-cell and inter-cell interferences plus the Additive White Gaussian Noise, hereinafter AWGN, which cannot be removed at the mobile station receiver.

2. Method to estimate the interferences affecting a radio channel set up in a cellular telephone system for communicating between a base station and a mobile station conveying on a carrier frequency signals subdivided in time frames and the frames in timeslots each including bursts of traffic data accessed by code division (code 1, ... , code N) and given uncorrelated sequences of symbols, named for convenience midambles, known in advance by the peer radio entities connected at the two ends of the channel and used either for time synchronisation, and/or the estimation of the impulse response of the relevant radio channel, **characterised in that** a base station of that cellular telephone system connected to served mobile stations of the same cellular telephone system performs the steps of:

　　　a) correlating the baseband signal received in correspondence of the physical channel carrying a midamble sequence (m$^{th}$) selected among the ones transmitted by the served mobile stations with the corresponding sequence (m$^{th}$);
　　　b) receiving the value of the path-loss evaluated by a served mobile station which transmits the selected midamble sequence (m$^{th}$);
　　　c) dividing the known-in-advance transmission power of the selected midamble sequence (m$^{th}$) by the value of the path-loss, then subtracting the quotient from the result of the correlation obtaining both intra-cell and inter-cell interferences plus the Additive White Gaussian Noise, hereinafter AWGN, which cannot be removed at the base station receiver.

3. The method of one of the preceding claims, **characterised in that** the mobile station calculates the path-loss by the following steps:

　　　c1) correlating the baseband signal received in correspondence of a physical beacon channel (DwPTS) transmitted by the base station at constant reference power with the relevant sequence of symbols (DwPCH);
　　　c2) measuring the total power received from said beacon sequence (DwPCH);
　　　c3) dividing said constant reference power by the double of the result of the substep c1) minus the result of the substep c2) obtaining the value of the path-loss.

4. The method of one of the preceding claims, **characterised in that** the mobile station performs the step of:

　　　- measuring the total power received from all the active midamble sequences transmitted by the base station, and reporting the measured value to the base station;

　　the base station performs the steps of:

　　　- summing up the known transmission powers of all active midambles transmitted towards the mobile stations and dividing the summation by the value of the path-loss received from the mobile station;
　　　- subtracting the result of the previous step from the value of the total power received from the mobile station, obtaining the value of inter-cell interference plus the AWGN affecting the measure;
　　　- linearly combing the result of the previous step from the interference calculated at step c) which cannot be removed at the receiver, obtaining only the intra-cell interference affecting the selected midamble and the associated channelisation codes.

5. The method of one of the preceding claims, **characterised in that** the selected midamble (Midamble sequence m$^{th}$) is in use by the measuring radio entity, and the estimated interference provides an indication of the perceived quality exactly on that specific midamble (Midamble sequence m$^{th}$) and the associate channelisation codes (code 1, ... , code N).

6. The method of the preceding claim, **characterised in that** the correlation result is divided by the interference which can't be removed by the receiver, obtaining the signal to interferences plus AWGN ratio as perceived on that specific midamble (Midamble sequence m$^{th}$) and the associate channelisation codes (code 1, ... , code N).

7. The method of one of one of the preceding claims from 1 to 4, **characterised in that** the selected midamble (Midamble sequence m$^{th}$) is not in use by the measuring radio entity, and the estimated interference provides indication for supporting resource allocation strategies at the base station.

8. The method of one of the preceding claims, **characterised in that** said selected midamble is predefined.

9. The method of one of the preceding claims except the preceding one, **characterised in that** said selected midamble is signalled by the base station to the mobile station.

**Patentansprüche**

1. Verfahren zur Schätzung der Interferenz, welche sich auf einen Funkkanal auswirkt, der in einem zellularen Telefonsystem eingerichtet ist für die Kommunikation zwischen einer Basisstation und einer Mobilstation und der auf einer Trägerfrequenz Signale transportiert, welche in Zeitrahmen und die Zeitrahmen wiederum in Zeitschlitze untergliedert sind, die jeweils Signalpakete von Verkehrsdaten enthalten, auf die im Kodemultiplex-Verfahren (Kode 1, ..., Kode N) zugegriffen wird, sowie gegebene unkorrelierte Sequenzen von Symbolen, welche der Einfachheit halber als Midambles bezeichnet werden, die den an den beiden Enden des Kanals angeschlossenen Peer-Funkeinheiten im Voraus bekannt sind und für die zeitliche Synchronisation und/oder die Schätzung der Impulsantwort des betreffenden Funkkanals verwendet werden, **dadurch gekennzeichnet, dass** eine Mobilstation des besagten Telefonsystems, welche mit einer versorgenden Basisstation desselben Telefonsystems verbunden ist, die folgenden Schritte ausführt:

   a) Korrelieren des empfangenen Basisband-Signals entsprechend dem physikalischen Kanal, welcher eine (m-te) Midamble-Sequenz enthält, die aus den von der versorgenden Basisstation übertragenen Sequenzen ausgewählt wurde, mit der entsprechenden (m-ten) Sequenz;
   b) Schätzen der Funkfelddämpfung des Funkkanals und Übertragen des entsprechenden Wertes zusammen mit dem Ergebnis der Korrelation an die Basisstation; und
   und dass die Basisstation die folgenden Schritte ausführt:
   c) Dividieren der im Voraus bekannten Sendeleistung der ausgewählten (m-ten) Midamble-Sequenz durch den Wert der Funkfelddämpfung und anschließend Subtrahieren des Quotienten von dem Ergebnis der Korrelation, wodurch sowohl die zelleninternen als auch die zellenübergreifenden Interferenzen plus das additive weiße Gauß'sche Rauschen, nachfolgend AWGN genannt, erhalten werden, welche am Empfänger der Mobilstation nicht eliminiert werden können.

2. Verfahren zur Schätzung der Interferenz, welche sich auf einen Funkkanal auswirkt, der in einem zellularen Telefonsystem eingerichtet ist für die Kommunikation zwischen einer Basisstation und einer Mobilstation und der auf einer Trägerfrequenz Signale transportiert, welche in Zeitrahmen und die Zeitrahmen wiederum in Zeitschlitze untergliedert sind, die jeweils Signalpakete von Verkehrsdaten enthalten, auf die im Kodemultiplex-Verfahren (Kode 1, ..., Kode N) zugegriffen wird, sowie gegebene unkorrelierte Sequenzen von Symbolen, welche der Einfachheit halber als Midambles bezeichnet werden, die den an den beiden Enden des Kanals angeschlossenen Peer-Funkeinheiten im Voraus bekannt sind und für die zeitliche Synchronisation und/oder die Schätzung der Impulsantwort des betreffenden Funkkanals verwendet werden, **dadurch gekennzeichnet, dass** eine Basisstation des besagten Telefonsystems, welche mit versorgten Mobilstationen desselben Telefonsystems verbunden ist, die folgenden Schritte ausführt:

   a) Korrelieren des empfangenen Basisband-Signals entsprechend dem physikalischen Kanal, welcher eine (m-te) Midamble-Sequenz enthält, die aus den von den versorgten Mobilstationen übertragenen Sequenzen ausgewählt wurde, mit der entsprechenden (m-ten) Sequenz;
   b) Empfangen des Werts der Funkfelddämpfung, der von einer versorgten Mobilstation geschätzt wurde, welche die ausgewählte (m-te) Midamble-Sequenz überträgt;
   c) Dividieren der im Voraus bekannten Sendeleistung der ausgewählten (m-ten) Midamble-Sequenz durch den Wert der Funkfelddämpfung und anschließend Subtrahieren des Quotienten von dem Ergebnis der Korrelation, wodurch sowohl die zelleninternen als auch die zellenübergreifenden Interferenzen plus das additive weiße Gauß'sche Rauschen, nachfolgend AWGN genannt, erhalten werden, welche am Empfänger der Basisstation nicht eliminiert werden können.

3. Verfahren gemäß einem der vorstehenden Ansprüche, **dadurch gekennzeichnet, dass** die Mobilstation die Funkfelddämpfung in den folgenden Schritten berechnet:

   c1) Korrelieren des empfangenen Basisbandsignals entsprechend einem physikalischen Beacon-Kanal (DwPTS), welcher von der Basisstation mit konstanter Bezugsleistung übertragen wird, mit der entsprechenden Sequenz von Symbolen (DwPCH);
   c2) Messen der Gesamt-Empfangsleistung anhand der besagten Beacon-Sequenz (DwPCH);
   c3) Dividieren der besagten konstanten Bezugsleistung durch das Doppelte des Ergebnisses aus dem Teilschritt c1) abzüglich des Ergebnisses von Teilschritt c2), wodurch der Wert der Funkfelddämpfung erhalten wird.

4. Verfahren gemäß einem der vorstehenden Ansprüche, **dadurch gekennzeichnet, dass** die Mobilstation den folgenden Schritt ausführt:

- Messen der Gesamt-Empfangsleistung von allen aktiven Midamble-Sequenzen, die von der Basisstation übertragen werden, und Melden des gemessenen Wertes an die Basisstation;

und dass die Basisstation die folgenden Schritte ausführt:

- Aufaddieren der bekannten Sendeleistungswerte aller aktiven, an die Mobilstationen übertragenen Midamble-Sequenzen und Dividieren dieser Summe durch den Wert der Funkfelddämpfung, der von der Mobilstation gemeldet wurde;
- Subtrahieren des Ergebnisses aus dem vorstehenden Schritt von dem Gesamt-Empfangsleistungswert, der von der Mobilstation übermittelt wurde, wodurch der Wert für die zellenübergreifende Interferenz plus AWGN erhalten wird, der die Messung beeinflusst;
- lineares Kombinieren des Ergebnisses aus dem vorstehenden Schritt anhand der Interferenz, die in Schritt c) berechnet wurde und die am Empfänger nicht eliminiert werden kann, wodurch die zelleninterne Interferenz erhalten wird, die sich auf die ausgewählte Midamble-Sequenz und die zugehörigen Kanalisierungskodes auswirkt .

5. Verfahren gemäß einem der vorstehenden Ansprüche, **dadurch gekennzeichnet, dass** die ausgewählte Midamble (m-te Midamble-Sequenz) von der messenden Funkeinheit verwendet wird, und dass die geschätzte Interferenz einen Hinweis auf die exakt für diese spezifische Midamble (m-te Midamble-Sequenz) sowie die zugehörigen Kanalisierungskodes (Kode 1, ..., Kode N) wahrgenommene Qualität liefert.

6. Verfahren gemäß dem vorstehenden Anspruch, **dadurch gekennzeichnet, dass** das Ergebnis der Korrelation durch die Interferenz dividiert wird, welche von dem Empfänger nicht eliminiert werden kann, wodurch der Signal-Interferenz-plus-AWGN-Abstand erhalten wird, wie er in dieser spezifischen Midamble (m-ten Midamble-Sequenz) und den zugehörigen Kanalisierungskodes (Kode 1, ..., Kode N) wahrgenommen wird.

7. Verfahren gemäß einem der vorstehenden Ansprüche 1 bis 4, **dadurch gekennzeichnet, dass** die ausgewählte Midamble (m-te Midamble-Sequenz) von der messenden Funkeinheit nicht verwendet wird, und dass die geschätzte Interferenz einen Hinweis zur Unterstützung der Strategien für die Ressourcenzuteilung an der Basisstation liefert.

8. Verfahren gemäß einem der vorstehenden Ansprüche, **dadurch gekennzeichnet, dass** die besagte ausgewählte Midamble vorab definiert ist.

9. Verfahren gemäß einem der vorstehenden Ansprüche mit Ausnahme des letztgenannten, **dadurch gekennzeichnet, dass** die besagte ausgewählte Midamble von der Basisstation an die Mobilstation signalisiert wird.

**Revendications**

1. Procédé pour estimer les interférences affectant un canal radio mis en place dans un système de téléphone cellulaire pour communiquer entre une station de base et une station mobile transportant sur une fréquence de porteuse des signaux subdivisés en trames de temps et les trames en intervalles de temps incluant chacun des rafales de données de trafic auxquelles il est accédé par répartition en code (code 1, ..., code N) et séquences de symboles non corrélées données, nommées aux fins de commodité midambles, connues à l'avance par les entités radio homologues connectées aux deux extrémités du canal et utilisées pour la synchronisation temporelle et/ou l'estimation de la réponse impulsionnelle du canal radio concerné, **caractérisé en ce qu'**une station mobile de ce système de téléphone cellulaire connectée à une station de base de desserte du même système de téléphone cellulaire exécute les étapes consistant à :

a) corréler le signal de bande de base reçu en correspondance du canal physique qui transporte une séquence ($m^{ème}$) midamble choisie parmi celles transmises par la station de base de desserte avec la séquence ($m^{ème}$) correspondante ;
b) évaluer l'affaiblissement sur le trajet du canal radio et transmettre la valeur pertinente en même temps que le résultat de la corrélation à la station de base ; et

la station de base exécute les étapes consistant à :

c) diviser la puissance de transmission connue d'avance de la séquence (m^ème) midamble choisie par la valeur de l'affaiblissement sur le trajet, puis soustraire le quotient du résultat de la corrélation pour obtenir les interférences intracellulaires et intercellulaires plus le Bruit Blanc Gaussien Additif, ci-après AWGN (Additive White Gaussian Noise), qui ne peut être éliminé au niveau du récepteur de la station mobile.

2. Procédé pour estimer les interférences affectant un canal radio mis en place dans un système de téléphone cellulaire pour communiquer entre une station de base et une station mobile transportant sur une fréquence de porteuse des signaux subdivisés en trames de temps et les trames en intervalles de temps incluant chacun des rafales de données de trafic auxquelles il est accédé par répartition en code (code 1, ..., code N) et séquences de symboles non corrélées données, nommées aux fins de commodité midambles, connues à l'avance par les entités radio homologues connectées aux deux extrémités du canal et utilisées pour la synchronisation temporelle et/ou l'estimation de la réponse impulsionnelle du canal radio concerné, **caractérisé en ce qu'**une station de base de ce système de téléphone cellulaire connectée aux stations mobiles desservies du même système de téléphone cellulaire exécute les étapes consistant à :

a) corréler le signal de bande de base reçu en correspondance du canal physique transportant une séquence (m^ème) midamble choisie parmi celles transmises par les stations mobiles desservies avec la séquence (m^ème) correspondante ;

b) recevoir la valeur de l'affaiblissement sur le trajet évaluée par une station mobile desservie qui transmet la séquence (m^ème) midamble choisie ;

c) diviser la puissance de transmission connue d'avance de la séquence (m^ème) midamble choisie par la valeur de l'affaiblissement sur le trajet, puis soustraire le quotient du résultat de la corrélation pour obtenir les interférences intracellulaires et intercellulaires plus le Bruit Blanc Gaussien Additif, ci-après AWGN (Additive White Gaussian Noise), qui ne peut être éliminé au niveau du récepteur de la station de base.

3. Procédé selon l'une quelconque des revendications précédentes, **caractérisé en ce que** la station mobile calcule l'affaiblissement sur le trajet par les étapes consistant à :

c1) corréler le signal de bande de base reçu en correspondance d'un canal balise physique (DwPTS) transmis par la station de base à une puissance de référence constante avec la séquence de symboles (DwPCH) pertinente ;

c2) mesurer la puissance totale reçue de ladite séquence balise (DwPCH) ;

c3) diviser ladite puissance de référence constante par le double du résultat de la sous-étape c1) moins le résultat de la sous-étape c2) pour obtenir la valeur de l'affaiblissement sur le trajet.

4. Procédé selon l'une quelconque des revendications précédentes, **caractérisé en ce que** la station mobile exécute l'étape consistant à :

- mesurer la puissance totale reçue de toutes les séquences midambles actives transmises par la station de base, et renvoyer la valeur mesurée à la station de base ;

la station de base exécute les étapes consistant à :

- additionner les puissances de transmission connues de toutes les midambles actives transmises vers les stations mobiles et diviser la somme par la valeur de l'affaiblissement sur le trajet reçue de la station mobile ;

- soustraire le résultat de l'étape précédente de la valeur de la puissance totale reçue de la station mobile, pour obtenir la valeur de l'interférence intercellulaire plus le AWGN affectant la mesure ;

- combiner linéairement le résultat de l'étape précédente à partir de l'interférence calculée à l'étape c) qui ne peut être éliminée au niveau du récepteur, pour obtenir uniquement l'interférence intracellulaire affectant la midamble choisie et les codes de canalisation associés.

5. Procédé selon l'une quelconque des revendications précédentes, **caractérisé en ce que** la midamble choisie (séquence midamble m^ème) est utilisée par l'entité radio de mesure, et l'interférence estimée donne une indication de la qualité perçue exactement sur cette midamble spécifique (séquence midamble m^ème) et les codes de canalisation (code 1, ..., code N) associés.

6. Procédé selon la revendication précédente, **caractérisé en ce que** le résultat de la corrélation est divisé par l'interférence qui ne peut être éliminée par le récepteur, pour obtenir le rapport du signal aux interférences plus le AWGN tel qu'il est perçu sur cette midamble spécifique (séquence midamble m$^{ème}$) et les codes de canalisation (code 1, ..., code N) associés.

7. Procédé selon l'une quelconque des revendications précédentes de 1 à 4, **caractérisé en ce que** la midamble choisie (séquence midamble m$^{ème}$) n'est pas utilisée par l'entité radio de mesure, et l'interférence estimée donne une indication pour supporter les stratégies d'attribution de ressources au niveau de la station de base.

8. Procédé selon l'une quelconque des revendications précédentes, **caractérisé en ce que** ladite midamble choisie est prédéfinie.

9. Procédé selon l'une quelconque des revendications précédentes à l'exception de la précédente, **caractérisé en ce que** ladite midamble choisie est signalée par la station de base à la station mobile.

# TD-SCDMA FRAME STRUCTURE

GP1 (96 chips)

DwPTS (96 chips) basic downlink synchronization sequence DwPCH

UpPTS (160 chips) basic uplink synchronization sequence UpPCH

GP2 (16 chips)

TS0  TS1  TS2  TS3  TS4  TS5  TS6

t

TS# = Time Slot  ↑ Uplink Traffic time slots

GP = Guard Period  ↓ Downlink Traffic time slots

## Fig. 1

# DEFAULT ASSOCIATION BETWEEN MIDAMBLES AND SPREADING CODES ON THE I$^{TH}$ TIMESLOT (DOWNLINK)

TS i$^{th}$

352 chips including data symbols

352 chips including data symbols

Midamble sequence m$^1$ (144 chips)

GP2 (16 chips)

| code 1 | | code 1 | |
| code 2 | | code 2 | |

Midamble sequence m$^{th}$

Set of N spreading codes allocated in the i$^{th}$ timeslot

| code n$^{th}$ - K | | code n$^{th}$ - K | |
| code n$^{th}$ - K+1 | | code n$^{th}$ - K+1 | |
| code n$^{th}$ - k$^{th}$ | | code n$^{th}$ - k$^{th}$ | |
| code n$^{th}$ | | code n$^{th}$ | |

K spreading codes associated to the m$^{th}$ midamble sequence

| code N-1 | | code N-1 | |
| code N | | code N | |

Midamble sequence m$^M$

## Fig.2